**Europäisches Patentamt**

**European Patent Office**

**Office européen des brevets**

(19)

(11) Numéro de publication: **0 124 553 B1**

(12) ## FASCICULE DE BREVET EUROPEEN

(45) Date de publication du fascicule du brevet:
**26.08.87**

(51) Int. Cl.⁴: **G 02 B 13/10,** G 03 B 27/68

(21) Numéro de dépôt: **83903386.7**

(22) Date de dépôt: **08.11.83**

(86) Numéro de dépôt international:
**PCT/FR 83/00221**

(87) Numéro de publication internationale:
**WO 84/02008 (24.05.84** Gazette **84/13)**

(54) **PERFECTIONNEMENT AUX DISPOSITIFS OPTIQUES D'IMPRESSION DE FLANS DESTINES A L'EMBOUTISSAGE.**

(30) Priorité: **10.11.82 FR 8219353**

(43) Date de publication de la demande:
**14.11.84 Bulletin 84/46**

(45) Mention de la délivrance du brevet:
**26.08.87 Bulletin 87/35**

(84) Etats contractants désignés:
**AT BE DE GB NL**

(56) Documents cités:
**DE - A - 1 904 388**
**FR - A - 2 453 432**
**US - A - 3 073 210**
**US - A - 3 238 909**
**US - A - 3 314 329**
**US - A - 3 627 412**

(73) Titulaire: **CEBAL, 98, boulevard Victor Hugo,
F-92115 Clichy (FR)**

(72) Inventeur: **VANY, Gérard, "La Mission"
Villaines-sous-Malicorne, F-72270 Malicorne-sur-Sarthe
(FR)**

(74) Mandataire: **Séraphin, Léon et al, PECHINEY 28, rue de
Bonnel, F-69433 Lyon Cedex 3 (FR)**

ACTORUM AG

## Description

L'invention concerne un perfectionnement aux dispositifs optiques d'impression de flans destinés à la fabrication de boîtes par emboutissage.

La décoration de boîtes est obtenue soit au moyen d'une bande de papier pré-imprimée que l'on enroule et colle autour de la boîte, soit par impression directe de la boîte, soit afin, par impression du flan destiné à produire la boîte par emboutissage.

Dans ce dernier cas, qui tend à se généraliser, le flan doit être imprimé par une image prédéformée de façon telle que l'image originale sera restituée après emboutissage.

Des appareillages optiques permettant d'obtenir une image prédéformée ont été décrits dans des documents antérieurs, et, en particulier, dans les brevets US-A 3 238 909, 3 314 329, 3 964 910, 4 119 484 et dans le brevet FR-A 1 590 126 (=US 3 627 412) au nom de la demanderesse, ainsi que dans le brevet FR-A 2 453 432 au nom de Ferembal, qui utilise, comme élément optique, une lame souple, réfléchissante, tournant sur l'axe du système optique autour de la boîte à réaliser.

A l'heure actuelle, les exigences de la clientèle sur la qualité d'impression (fidélité, contraste, restitution des couleurs, etc. . . .) ne sont plus entièrement satisfaites par les dispositifs optiques connus; la lisibilité des textes en petits caractères, par exemple, n'est pas toujours assurée. Pour les impressions en quadrichromie, on constate un manque de netteté, ce qui oblige à diaphragmer fortement afin d'augmenter la profondeur du champ, d'où augmentation du temps de pose; on constate alors que la lumière diffuse atténue les ombres au voisinage des zones de lumières, ce qui donne à l'impression une apparance «laiteuse».

L'objet de la présente invention est un perfectionnement du bloc optique anamorphoseur, objet de notre brevet français FR-A 1 590 126. Dans ce brevet, on décrit un appareillage pour l'impression, sur des flans d'emboutissage, d'une image prédéformée, caractérisé en ce qu'il comporte essentiellement: un prisme torique et une lentille asphérique et de révolution associés à un objectif photographique apochromatique de grande distance focale. Le prisme torique est réalisé avec une matière très transparents telle que le polymétacrylate de méthyle.

Le dispositif d'impression de flans de l'invention, permettant d'obtenir sur ces flans une image prédéformée qui, après emboutissage, restituera une image normale, comprend comme il est connu, une source lumineuse, un appareil photographique et un prisme torique ayant un axe optique commun.

Selon l'invention, l'angle du prisme torique ($45°$ $- \alpha$) est inférieur à $42{,}05°$, et la face du prisme ou bien d'une lentille qui lui est accolée, face située en regard de l'appareil photographique, est taillée de façon à jouer le rôle d'une lentille de correction de linéarité, et est pour cela définie, dans un système de coordonnées paramétriques $x_t$ et

$y_t$ centrées sur le point d'intersection de l'axe optique et d'un plan de référence parallèle à la face du prisme avant taille, par les équations suivantes:

$$x_t = \left( C_1 + \frac{t}{C_2} \right) C_3$$

$$y_t = y_{t-1} + (x_t - x_{t-1}) \frac{p \cos 2\alpha - t/C_2}{C_4}$$

les paramètres $C_1$, $C_2$, $C_3$ et $C$, étant définis comme suit à partir du diamètre interne $\Phi_o$ et de la hauteur H du prisme torique, du décalage A du cliché à reproduire par rapport à l'arête (13) du prisme, de la distance focale F de la lentille de l'appareil photographique, de l'indice de réfraction (n) de la matière constituant le prisme et de l'angle au sommet ($45° - \alpha$) dudit prisme:

$$C_1 = \Phi_o/2 + A \cos 2\alpha$$
$$C_2 = \Phi_o/(\Phi_o + 2A \cos 2\alpha)$$
$$C_3 = (C'_1 + C'_2 - H)/C'_1$$
$$C_4 = (H - C'_2)(n-1)$$

$$\text{avec } C'_1 = F(1 + 1/C_2) \text{ et } C'_2 = [(H - A . \sin 2\alpha)] \frac{(n-1)}{n}$$

Dans ce dispositif, on associe en un élément monolithique le prisme torique et la lentille de correction, le prisme assurant uniquement la fonction de renvoi des rayons lumineux, la lentille effectuant les corrections optiques assurant la linéarité de l'image emboutie. En outre, l'angle du prisme est déterminé de façon à obtenir une réflection totale des rayons lumineux émis par la source.

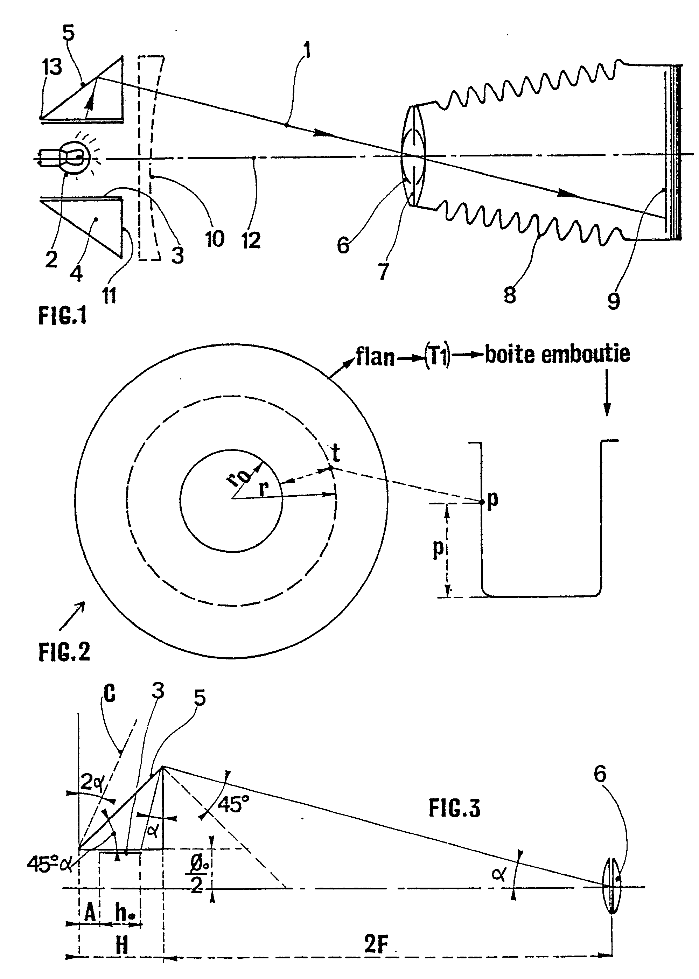

Les figures 1 à 8 illustrent la mise en œuvre de l'invention, dont on rappellera tout d'abord le principe.

Lorsqu'on emboutit une boîte à partir d'un flan plan, de forme circulaire, on constate qu'à chaque point repéré sur la surface du plan correspond alors un point sur la surface de la boîte emboutie. Il existe donc une relation entre la position antérieure sur le flan et la position finale sur la boîte emboutie, d'un point de la surface du métal. On conçoit alors qu'il est possible, en connaissant cette relation, d'imprimer le flan avant déformation de telle manière que le graphisme subisse, lors de l'emboutisssage, une déformation telle que l'on obtienne l'aspect désiré. De manière pratique, en général, on dispose d'une étiquette de présentation capable de s'enrouler autour de la boîte étudiée; on veut alors imprimer le flan de manière à obtenir, après emboutissage, une boîte décorée de même aspect que si l'étiquette avait été enroulée autour d'elle.

Si on appelle T la transformation qui fait correspondre les points du flan à ceux de la boîte:

flan → (T) → boîte

le procédé consiste à faire optiquement la transformation inverse $T^{-1}$ afin d'obtenir à partir d'une étiquette, une image déformée utilisée pour l'impression des flans:

étiquette → (T⁻¹) → flan

En partant d'une étiquette, on voit qu'à la suite de ces transformations, on obtient bien une boîte de même aspect que l'étiquette:

étiquette → (T⁻¹, optique) → flan → (T, emboutissage) → boîte

Pour déterminer la fonction T, on emboutit un flan imprimé avec un réseau de lignes formant un système de coordonnées permettant de repérer la position d'un point avant et après emboutissage.

Dans le cas des boîtes rondes, on utilise un système de coordonnées polaires $(r, \theta)$ pour le flan, la position des points sur la boîte après emboutissage étant alors repérée par un système $(p, \theta)$ p étant la position d'un point mesurée sur une génératrice de la boîte à partir du fond. On peut alors considérer que la transformation T se résume à une relation entre r et p. En fait, on préfère considérer la valeur $t = r - r_o$, $r_o$ étant le rayon de la boîte, on a alors une relation entre le nombre de traits (par mm) et leur position sur l'extérieur de la boîte.

Il faut remarquer que la transformation T que l'on obtient ainsi expérimentalement par relevés dépend des conditions de l'expérience (qualité du métal, réglage et état des outils, etc. ... ). On doit donc, pour obtenir ultérieurement de bons résultats refaire cette expérience dans des conditions les plus proches de celles qui seront utilisées dans la pratique industrielle. On doit donc emboutir un nombre suffisant de boîtes avec le métal définitif, pour reproduire les conditions d'une production en série, on doit aussi faire attention au centrage du flan qui porte le système de coordonnées $r, \theta$, (r variant de mm en mm).

Le résultat final se résume alors en un tableau donnant les valeurs de p correspondant à chacune des valeurs de t. Ce tableau, complété par un relevé dimensionnel de la boîte, permet de réaliser le bloc optique effectuant la transformation $T^{-1}$.

La figure 1 représente, en coupe longitudinale, le dispositif optique décrit dans le brevet FR-A 1 590 126.

La figure 2 schématise la transformation par emboutissage d'un point t du flan en un point p de la boîte.

Les figures 3 à 7 représentent le parcours des rayons lumineux dans le dispositif optique, objet de l'invention.

La figure 8 représente la coupe d'un prisme réalisé selon l'invention.

Les rayons lumineux tels que (1) émis par la source (2) traversent le cliché transparent (3) qui porte l'image à reproduire, puis le prisme torique (4) dont la face externe est argentée ou aluminiée. Les rayons traversent ensuite la lentille (6) et le diaphragme (7) de l'appareil photographique (8) et viennent former sur la face sensible plane (9) l'anamorphose de l'image du cliché (3).

Dans le brevet FR-A 1 590 126, les corrections optiques étaient apportées par une lentille additionnelle (10) représentée en trait interrompu, et disposée à une certaine distance en avant du prisme (4).

Selon la présente invention, on supprime cette lentille additionnelle (10) et on modifie la forme de la face (11) du prisme torique (4) en regard de l'appareil photographique, de façon à assurer les corrections optiques. L'axe optique commun du système est représenté par la ligne (12). En outre, le prisme (4) étant réalisé, de préférence, en polyméthacrylate de méthyle, l'argenture ou l'aluminiage de sa face externe (5) est difficile à réaliser et reste très fragile. Pour surmonter cet inconvénient, on modifie l'angle du prisme qui était, à l'origine, de 45°, de façon que les rayons lumineux subissent une réflexion totale. En variante de l'invention, il est également possible de réaliser tout d'abord l'ensemble prisme-lentille de correction en deux pièces et de les accoler ensuite en un bloc monolithique, de préférence sans utiliser d'agent de liaison tel qu'une colle, en polissant très finement les deux faces en contact (face avant du prisme, face arrière de la lentille), de telle sorte qu'il y ait contact parfait entre les deux faces sans interposition d'une lame d'air.

Cette variante permet de disposer d'un jeu de lentilles interchangeables taillées selon des profils différents pour tenir compte des particularités de chaque type de boîte à imprimer; elle permet aussi de rendre la taille de la lentille plus facile, car la fixation du prisme torique sur la machine d'usinage n'est pas très facile.

L'angle du prisme est déterminé de façon suivante. Soient:
H la hauteur du prisme,
h la hauteur de la boîte (donc du cliché 3),
$\varphi_o$ le diamètre interne du prisme torique (4),
F la distance focale de la lentille (6),

A le décalage, par rapport à l'arête (13) du prisme, de la base du cliché (3) représentant le dessin à reproduire, car on ne peut pas avoir h=H, la partie terminale et la partie supérieure du prisme n'étant pas utilisable, en pratique, sur les 3 à 4 derniers millimètres.

L'angle critique du polyméthacrylate de méthyle (dont l'indice de réfraction est n = 1,493) est:

$$\alpha_o = \text{Arc. sin } \frac{1}{1,493} = 42,05°$$

Il faut donc choisir un angle inférieur à 42,05° pour assurer la réflexion totale. La pratique montre que l'on obtient les meilleurs résultats avec $(45 - \alpha) < 35°$, et, de préférence, compris entre 35° et 32°. Soit $\alpha$ la valeur angulaire dont on diminue l'angle de 45° pour assurer la réflexion totale. Le point extrême de réflexion est celui qui correspond à la partie haute de la boîte (zone de sertissage).

Soit $h_o$ cette hauteur:

$$\text{tg } \alpha \approx \frac{1}{2F} \left[ \frac{\Phi_o}{2} + (A + h_o) \text{ tg } (45 - \alpha) \right]$$

(N.B.: le grandissement optique I/0 est très peu différent de 1, d'où la division par 2F).

On peut déterminer $\alpha$ de façon très approximative en admettant que tg $(45 - \alpha) \# 1$, donc $\alpha \# 0$, d'où:

$$\text{tg } \alpha \# \frac{1}{2F} \left( \frac{\Phi_o}{2} + A + h_o \right)$$

Application numerique et calcul de la valeur de A

On prend $0_o = 68$ mm, $h_o = 28$ mm. On fixe H = 60 mm pour être sûr que tous les rayons soient réfléchis. La focale de l'objectif est F = 480 mm.

(N.B.: la valeur de F = 480 mm est donnée à titre d'exemple particulier non limitatif.)

On a:

$$A \# \frac{\Phi}{2} \times \frac{1}{2F} \times H = \sim 2 \text{ mm}$$

que l'on peut arrondir à 3 mm, selon les résultats d'essais expérimentaux.

$$\alpha = \text{Arc tg } \frac{1}{2 \times 480} \left( \frac{68}{2} + 3 + 28 \right) = 3{,}87°$$

L'angle du prisme doit être donc inférieur à: $45° - 3{,}87° = 41{,}17°$.

Par sécurité, on adoptera un prisme d'angle 35°. On peut maintenant, à partir de cette donnée, calculer la valeur précise de A. On a toujours:

$$\text{tg } \alpha = \frac{1}{2F} \left[ \frac{\Phi_o}{2} + (A + h_o) \text{ tg } (45 - \alpha) \right]$$

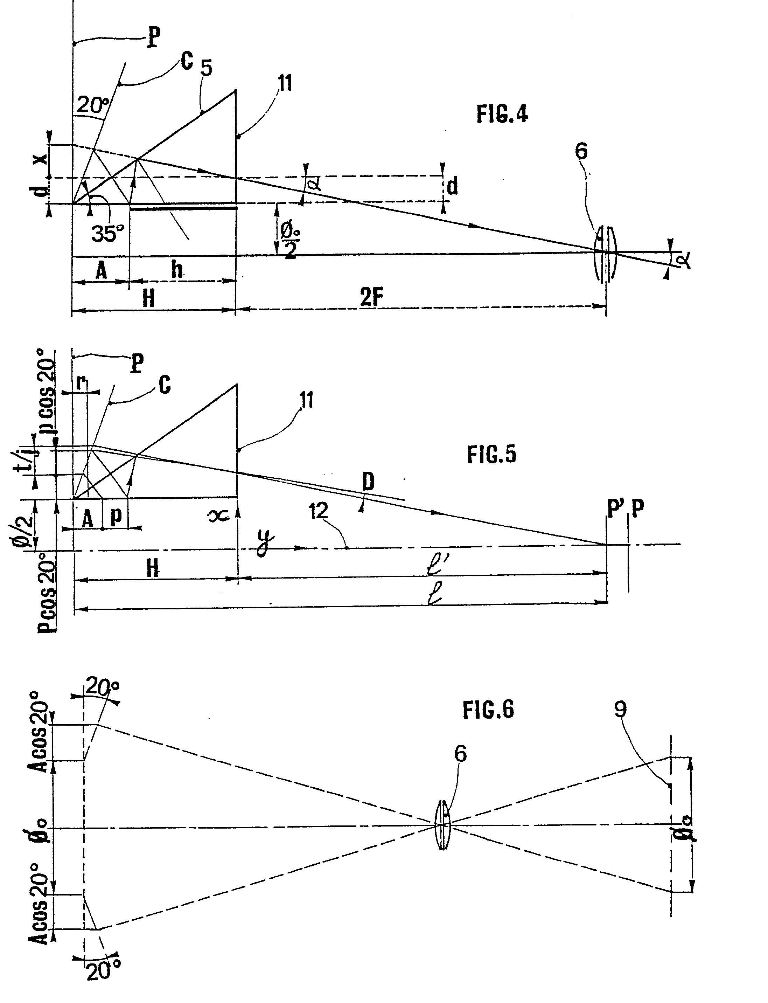

Selon la figure 4, on a:

$$\text{tg } \alpha = ^x/H$$

Du fait de la réduction de 45 à 35° de l'angle du prisme, l'image virtuelle du cliché, qui se formait sur le plan P, se forme maintenant sur un cône C qui fait, avec le plan P, un angle $2\alpha = 20°$ (figure 4).

$$\cos 2\alpha = \cos 20° \# \frac{x + d}{A}$$

$$\text{d'où: } A = \frac{x + d}{\cos 20°} = \frac{H.\text{tg}\alpha + d}{\cos 20°} \# \frac{H \dfrac{\Phi_o/2}{2f} + d}{\cos 20°}$$

Pour d = 1 mm, on a:

$$A = \frac{1}{\cos 20°} H . \frac{\Phi_o}{2} \cdot \frac{1}{2F} + 1$$

Avec
F = 480 mm
$\varphi_o = 68$ mm
$h_o = 28$ mm
H = 60 mm
on trouve:
A = 3,325 mm

On adoptera, en pratique, A = 5 mm.

Calcul de la correction à apporter à la face (11)

Il s'agit maintenant de calculer la forme de la face (11) du prisme qui assurera les corrections optiques. Le plan d'image virtuelle P étant devenu un cône C d'image virtuelle, on va, pour se ramener à un cas semblable, considérer la projection de ce cône sur un plan vertical (figures 5 et 6).

La valeur du grandissement $\gamma$, qui serait, dans le cas d'une face (11) plane et d'un angle $\alpha = 45°$, pour un point donné:

$$\gamma = \frac{\Phi_o}{\Phi_o + 2A}$$

devient, du fait de la projection:

$$\gamma = \frac{\Phi_o}{\Phi_o + 2A \cos 20°}$$

Conformément à la formule des systèmes centrés

$$\left( \frac{1}{z} + \frac{1}{z'} = \frac{1}{F} \right), \text{ou} \frac{z + z'}{zz'} = \frac{1}{F}, \text{on a:}$$

$$z = F\left( 1 + \frac{1}{\gamma} \right) \text{ avec } z = I_{-r}$$

r étant le décalage du plan de l'image virtuelle donné par le système prisme + face jouant le rôle de lentille, d'où:

$$F\left( 1 + \frac{1}{\gamma} \right) + r = I$$

I étant la distance entre l'arête du prisme et l'objectif (figure 5).

Pour déterminer r, il faut connaître le chemin optique parcouru par le rayon dans le polymétacrylate de méthyle (figure 6).

Lorsqu'on représente le cheminement de différents rayons dans le prisme, on constate que r varie en fonction de p (défini plus haut, comme la position d'un point mesurée sur une génératrice de la boîte à partir du fond). Mais cette valeur de r dépend de l'incidence du rayon sur la face usinée, celle-ci n'étant connue que lorsque ses coordonnées $x_t$ et $y_t$ sont calculées. C'est pourquoi, l'on détermine r approximativement de la manière suivante:

$$nH = H - nr \rightarrow r = H \left( \frac{n-1}{n} \right)$$

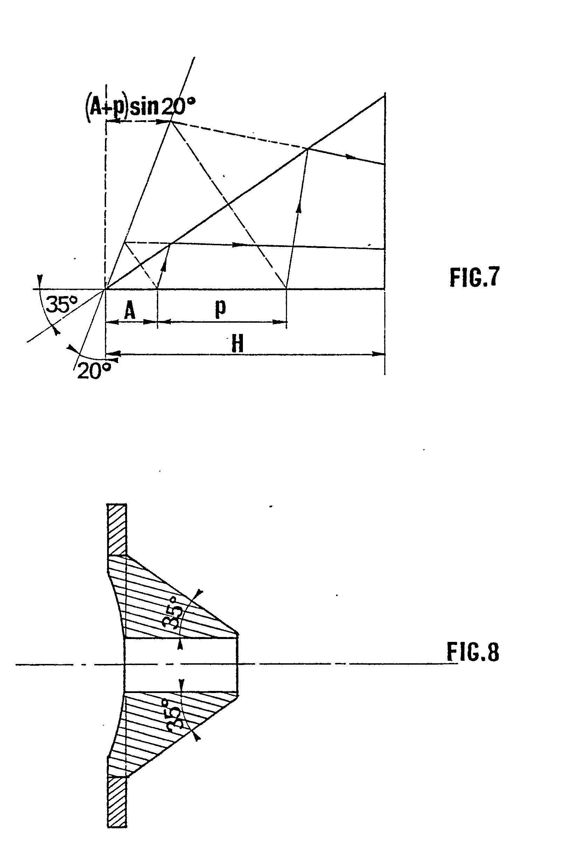

On a donc (figure 7):

$$n \left[ H - (A + p) \sin 20° \right] = \left[ H - (A + p) \sin 20° \right] + nr$$

d'où:

$$r = \frac{n-1}{n} \left[ H - (A + p) \sin 20° \right]$$

L'approximation de la face pour des prismes de faible angle donne la démarche suivante:

$$D = \frac{\delta}{H - r}$$

avec $\delta$ = déplacement dans la projection verticale du cône virtuelle.

$$\delta = p \cos 20° - \frac{t}{\gamma}$$

D'autre part, si l'on appelle $\beta$ l'angle de la tangente à la surface de la lentille:

$$D = (n - 1) \beta \Rightarrow \beta = \frac{p \cos 20° - t/\gamma}{(n - 1)(H - r)} = \frac{\Delta y}{\Delta x}$$

d'ou finalement:

$$y_t = y_{t-1} + (x_t - x_{t-1}) \frac{p \cos 20° - t/\gamma}{(H - r) 1 (-n - 1}$$

d'où:

$$x_t = \frac{\Phi_o}{2} + A \cos 20° + t \frac{l'}{l - r}$$

sachant que $l' = l - H$

$$x_t = \frac{\Phi_o}{2} + A \cos 20° + \frac{t}{\gamma} \frac{l - H}{l' - r}$$

$x_t$ et $y_t$ sont donc les coordonnées paramétriques qui définissent la forme de la face (11) du prisme, taillée en forme de lentille correctrice, l'axe optique (12) du système. Le plan de référence (x, y) est choisi arbitrairement. Ce peut être, par exemple, la face (11) du prisme avant taille, ou tout autre plan, parallèle à cette face, défini, par exemple, par la valeur H.

L'utilisation des coordonnées $x_t$, $y_t$ pour définir la face avant du prisme se prêtera aisément à un usinage par commande numérique.

Application numerique.

A partir de $\varphi_o = 68$ mm; A = 5 mm; F = 480 mm; n = 1,493 mm; H = 60 mm et $2\alpha = 20°$, on détermine tout d'abord un certain nombre de paramètres $C_1$ à $C_4$:

$$C_1 = \Phi_o/2 + A \cos 20° \qquad = 36,70 \text{ mm}$$

$$C_2 = \frac{\Phi_o}{\Phi_o + 2 A \cos 20°} \qquad = 0,878 \text{ mm}$$

$$C'_1 = F\left(1 + \frac{1}{C_2}\right) \qquad = 1026,33 \text{ mm}$$

$$C'_2 = \left[(H - A \cdot \sin 20°)\right] \frac{(n - 1)}{n} \quad = 19,24 \text{ mm}$$

$$C_3 = \frac{C'_1 + C'_2 - H}{C'_1} \qquad = 0,960 \text{ mm}$$

$$C_4 = (H - C'_2)(n - 1) \qquad = 20,1 \text{ mm}$$

$Y_o = 0$ (ce qui correspond à la face de référence du prisme)

$$x_o = C_1 \cdot C_3 (= 35,23)$$

puis on calcule pour chaque couple (p, t)

$$C'_2 = \left[H - (A + p) \sin 20°\right] \frac{(n - 1)}{n}$$

$$C'_3 = \frac{C'_1 + C'_2 + H}{C'_1}$$

$$C'_4 = (H - C'_2)(n - 1)$$

On a finalement (en rappelant que t a été défini plus haut, par rapport aux coordonnées polaires $(r, \theta)$ comme $t = r - r_o$, $r_o$ étant le rayon de la boîte, voir figure 2):

$$x_t = \left(C_1 + \frac{t}{C_2}\right) C_3 \qquad (I)$$

$$y_t = y_{t-1} + (x_t - x_{t-1}) \frac{p \cos 20° - t/C_2}{C_4} \qquad (II)$$

Exemple pratique de calcul de la face avant de la lentille

On dispose d'une boîte portant un système de coordonnées polaires et obtenue par emboutissage.

On relève les valeurs de p correspondant aux valeurs de t sur le flan (figure 2). La valeur t = 0 est attribuée au premier cercle visible sur le fond de la boîte posée sur un marbre. A t = 0, on associe p = 0, ce qui donne l'origine des mesures. Pour une boîte de H = 28 mm, on peut relever 20 valeurs de couples t/p.

Sur une boîte de 68 mm de diamètre et de 28 mm de haut, avec un objectif de 480 mm de distance focale, on a ainsi obtenu, pour chaque couple t/p, les paramètres $x_t$ et $y_t$.

Tableau I

| t | p | $\chi_t$ | $\gamma_t$ |
|---|---|---|---|
| 0 | 0 | 36,2441 | 0,0000 |
| 1 | 1,02 | 37,3057 | −0,0080 |
| 2 | 2,14 | 38,3665 | −0,0191 |
| 3 | 3,1 | 39,4279 | −0,0411 |
| 4 | 4,36 | 40,4876 | −0,0591 |
| 5 | 5,58 | 41,5471 | −0,0752 |
| 6 | 6,86 | 42,6061 | −0,0865 |
| 7 | 8,04 | 43,6653 | −0,0978 |
| 8 | 9,26 | 44,7239 | −0,1072 |
| 9 | 10,4 | 45,7827 | −0,1186 |
| 10 | 11,76 | 46,8400 | −0,1214 |
| 11 | 13,08 | 47,8972 | −0,1176 |
| 12 | 14,42 | 48,9540 | −0,1063 |
| 13 | 15,76 | 50,0104 | −0,0874 |
| 14 | 17,16 | 51,0661 | −0,0584 |
| 15 | 18,56 | 52,1215 | −0,0192 |
| 16 | 19,94 | 53,1767 | −0,0291 |
| 17 | 21,26 | 54,2319 | −0,0838 |
| 18 | 22,52 | 55,2871 | −0,1418 |
| 19 | 23,94 | 56,3410 | −0,2107 |
| 20 | 24,8 | 57,3983 | −0,2647 |

A partir des paramètres $x_t$ et $y_t$, on peut maintenant déterminer les coordonnées X et Y définissant la taille de la lentille, à partir des équations I et II.

Les valeurs, calculées sur ordinateur, sont indiquées sur le tableau II. La face avant de la lentille a un diamètre de 140 mm, mais la taille ne porte que sur un diamètre de 120 mm. On a déterminé le profil à partir de 25 points pour lesquels sont données les valeurs de X le long du rayon de la lentille et Y (cote de la taille).

### Tableau II

|    | X       | Y       |
|----|---------|---------|
| 1  | 0,0000  | 0,0000  |
| 2  | 10,0000 | 0,0000  |
| 3  | 20,0000 | 0,0000  |
| 4  | 34,0000 | 0,0000  |
| 5  | 36,2441 | 0,0000  |
| 6  | 37,3057 | –0,0080 |
| 7  | 38,3665 | –0,0191 |
| 8  | 39,4279 | –0,0411 |
| 9  | 40,4876 | –0,0591 |
| 10 | 41,5471 | –0,0752 |
| 11 | 42,6061 | –0,0865 |
| 12 | 43,6653 | –0,0978 |
| 13 | 44,7239 | –0,1072 |
| 14 | 45,7827 | –0,1186 |
| 15 | 45,8400 | –0,1214 |
| 16 | 47,8972 | –0,1176 |
| 17 | 48,9540 | –0,1063 |
| 18 | 50,0104 | –0,0874 |
| 19 | 51,0661 | –0,0584 |
| 20 | 52,1215 | –0,0192 |
| 21 | 53,1767 | 0,0291  |
| 22 | 54,2319 | 0,0838  |
| 23 | 55,2871 | 0,1418  |
| 24 | 56,3410 | 0,2107  |
| 25 | 57,3983 | 0,2547  |

La mise en œuvre d'un prisme, dont la face (11) a été taillée comme indiquée ci-dessus, a fourni des impressions nettes, contrastées et sans défauts géométriques. En particulier, des essais effectués avec prise de vue sur «Ektachrome» de Kodak, et des trames de 133 traits au pouce ont montré une excellente restitution des couleurs, l'absence de toute diffusion et réflexions parasites de lumière, un excellent contraste de l'image et une absence de déformation de la trame.

**Revendications**

1. Dispositif d'impression de flans destinés à l'emboutissage permettant d'obtenir sur les flans une image prédéformée qui, après emboutissage, restituera l'image originale, comprenant une source lumineuse (2), un prisme torique (4) et un appareil photographique (8) ayant un axe optique commun (12), caractérisé en ce que l'angle du prisme torique (45°-α) est inférieur à 42,05°, et en ce que la face (11) du prisme en regard de l'appareil photographique (8) est taillée de façon à jouer le rôle d'une lentille de correction de linéarité, cette face étant définie, dans un système de coordonnées paramétrique x3 t et $y_t$ centrées sur le point d'intersection de l'axe optique (12) et d'un plan de référence parallèle à la face (11) du prisme avant taille, par les équations suivantes:

$$x_t = \left(C_1 + \frac{t}{C_2}\right) C_3$$

$$y_t = y_{t-1} + (x_t - x_{t-1}) \frac{p \cos 2\alpha - t/C_2}{C_4}$$

les paramètres $C_1$, $C_2$, $C_3$ et C, étant définis comme suit à partir du diamètre interne $\Phi_o$ et de la hauteur H du prisme torique (4), du décalage A du cliché à reproduire par rapport à l'arête (13) du prisme, de la distance focale F de la lentille de l'appareil photographique (8), de l'indice de réfraction n de la matière constituant le prisme (4) et de l'angle au sommet (45°-α) dudit prisme:

$$\begin{aligned}
C_1 &= \Phi_o/2 + A \cos 2\alpha \\
C_2 &= \Phi_o/(\Phi_o + 2A \cos 2\alpha) \\
\text{et} \quad C_3 &= (C'_1 + C'_2 - H)/C'_1 \\
C_4 &= (H - C'_2)(n-1)
\end{aligned}$$

avec $C'_1 = F(1 + 1/C_2)$ et $C'_2 = [H - A.\sin 2\alpha] \dfrac{(n-1)}{n}$

2. Dispositif d'impression selon la revendication 1, dans lequel l'angle du prisme torique (45°-α) est inférieur ou égal à 35°.

3. Dispositif d'impression selon la revendication 1, caractérisé en ce que l'angle du prisme torique (45°-α), est compris entre 35 et 32°.

4. Dispositif d'impression selon l'une quelconque des renvendications 1 à 3, caractérisé en ce que le prisme (4) est taillé dans un bloc unique, de sorte que sa face (11) en regard de l'appareil photographique forme lentille.

5. Dispositif d'impression selon l'une quelconque des revendications 1 à 3, caractérisé en ce que la lentille et le prisme (4) sont obtenus par taille séparée et polissage très fin des surfaces en regard, puis accolés de façon à former un bloc monolithique.

**Patentansprüche**

1. Vorrichtung zum Bedrucken von Schnittteilen für Ziehen, die es ermöglicht, auf den Schnitteilen ein vorverformtes Bild zu erhalten, das nach dem Aufbringen auf der Verpackung das originale Bild wiederherstellt, mit einer Lichtquelle (2), einem torischen Prisma (4) und einem Photoapparat (8), die jeweils eine gemeinsame optische Achse (12) haben, dadurch gekennzeichnet, dass der Winkel des torischen Prismas (45°-α) kleiner als 42,5° ist, dadurch, dass die Fläche (11) des Prismas, die dem Photoapparat (8) gegenüberliegt, so geformt ist, dass sie die Rolle einer Linearitätskorrekturlinse übernimmt, wobei diese Fläche in einem parametrischen Koordinatensystem mit den Koordinaten $x_t$ und $y_t$ definiert ist, das auf dem Schnittpunkt der optischen Achse (12) und einer zur Fläche (11) des Prismas parallelen Bezugsebene durch folgende Gleichung definiert ist:

$$x_t = \left(C_1 + \frac{t}{C_2}\right) C_3$$

$$y_t = y_{t-1} + (x_t - x_{t-1}) \frac{p \cos 2\alpha - t/C_2}{C_4}$$

wobei die Parameter $C_1$, $C_2$, $C_3$ und $C_4$ folgendermassen ausgehend von dem Innendurchmesser $\Phi_o$ und der Höhe H des torischen Prismas (4), der Verschiebung A des zu reproduzierenden Klischees im Verhältnis zur Kante (13) des Prismas, der Brennweite F der Linse des Photoapparats (8), dem Brechungsindex n des Materials, aus dem das Prisma (4) hergestellt ist und dem spitzen Winkel (45°–$\alpha$) des Prismas:

$$C_1 = \Phi_o/2 + A \cos 2\alpha$$
$$C_2 = \Phi_o/(\Phi_o + 2A \cos 2\alpha)$$
$$C_3 = (C'_1 + C'_2 - H)/C'_1$$
$$\text{und } C_4 = (H - C'_2)(n-1)$$
$$\text{mit } C'_1 = F(1 + 1/C_2) \text{ et } C'_2 = [(H - A. \sin 2\alpha)] \frac{(n-1)}{n}$$

2. Vorrichtung nach Anspruch 1, bei der der Winkel (45°–$\alpha$) des torischen Prismas unterhalb oder gleich 35° liegt.

3. Vorrichtung nach Anspruch 1, dadurch gekennzeichnet, dass der Winkel (45°–$\alpha$) des torischen Prismas zwischen 35 und 32° liegt.

4. Vorrichtung nach einem der Ansprüche 1 bis 2, dadurch gekennzeichnet, dass das Prisma (4) aus einem einzigen Block geschnitten ist, derart, dass die dem Photoapparat gegenüberliegende Seite (11) eine Linse bildet.

5. Vorrichtung nach einem der Ansprüche 1 bis 3, dadurch gekennzeichnet, dass die Linse und das Prisma (4) durch getrenntes Schneiden und durch sehr feines Polieren der sich gegenüberliegenden Oberflächen und durch Verkleben erhalten werden, derart, dass ein monolithischer Block gebildet wird.

**Claims**

1. Apparatus for printing blanks intended for drawing, making it possible to produce on the blanks a pre-deformed image which after drawing will restore the original image, comprising a light source (2), a toric prism (4) and a camera (8) having a common optical axis (12), characterised in that the angle of the toric prism (45°–$\alpha$) is less than 42.5°, and that the face (11) of the prism facing the camera (8) is cut in such a way as to play the part of a linearity correction lens, said face being defined, in a system of parametric co-ordinates $x_t$ and $y_t$ which are centered on the point of intersection of the optical axis (12) and a reference plane parallel to the face (11) of the prism before cutting, by the following equations:

$$x_t = \left(C_1 + \frac{t}{C_2}\right) C_3$$

$$y_t = y_{t-1} + (x_t - x_{t-1}) \frac{p \cos 2\alpha - t/C_2}{C_4}$$

the parameters $C_1$, $C_2$, $C_3$ and C being defined as follows on the basis of the internal diameter $\Phi$ and the height H of the toric prism (4), the displacement A of the negative to reproduce, with respect to the edge (13) of the prism, the focal length F of the lens of the camera (8), the refractive index n of the material forming the prism (4) and the angle at the apex (45°–$\alpha$) of said prism:

$$C_1 = \Phi_o/2 + A \cos 2\alpha$$
$$C_2 = \Phi_o/(\Phi_o + 2A \cos 2\alpha)$$
$$C_3 = (C'_1 + C'_2 - H)/C'_1$$
$$\text{and } C_4 = (H - C'_2)(n-1)$$
$$\text{with } C'_1 = F(1 + 1/C_2) \text{ and } C'_2 = [(H - A. \sin 2\alpha)] \frac{(n-1)}{n}$$

2. Apparatus according to claim 1 wherein the angle of the toric prism (45°–$\alpha$) is less than or equal to 35°.

3. Apparatus according to claim 1 characterised in that the angle of the toric prism (45°–$\alpha$) is between 35 and 32°.

4. Apparatus according to any one of claims 1 to 3 characterised in that the prism (4) is cut from a single block such that its face (11) facing the camera forms a lens.

5. Apparatus according to any one of claims 1 to 3 characterised in that the lens and the prism (4) are obtained by separate cutting and very fine polishing of the facing surfaces, and then joined together so as to form a monolithic block.

**FIG.1**

flan →(T1)→ boite emboutie

**FIG.2**

**FIG.3**

0 124 553

FIG.4

FIG.5

FIG.6

11

$(A+p)\sin 20°$

35°

A

p

20°

H

**FIG.7**

**FIG.8**

35°

35°